# EUROPEAN PATENT APPLICATION

(11) **EP 2 597 173 A2**
(43) Date of publication of application: **29.05.2013**
(21) Application number: 11809917.5
(22) Date of filing: 22.07.2011
(51) Int. Cl.: C23C 14/12, C08F 14/18, C08F 14/20, C08F 14/22, C09J 5/04

(54) **FLUORINE-BASED POLYMER THIN FILM AND METHOD FOR PREPARING SAME**

(30) Priority: 22.07.2011 KR 20110073128; 22.07.2010 KR 20100070903
(71) Applicant: LG Chem, Ltd., Youngdungpo-gu Seoul 150-721 (KR)
(72) Inventor: LIM, Jin Hyong, Seoul 137-950 (KR); CHOI, Hyeon, Daejeon 305-380 (KR); KIM, Ki-Hwan, Daejeon 305-380 (KR)
(74) Representative: Goddar, Heinz J.
(86) International application number: PCT/KR2011/005450
(87) International publication number: WO 2012/011790

(57) **Abstract**

The present invention relates to a fluorine-based polymer thin film and a method of manufacturing the same, and the method of manufacturing a fluorine-based polymer thin film according to the present invention comprises the steps of: a) forming the fluorine-based polymer thin film on a first substrate; b) forming a thin layer comprising a first functional group on the fluorine-based polymer thin film; c) forming a thin layer comprising a second functional group on a second substrate; and d) chemically bonding the first functional group and the second functional group to each other. According to the present invention, a fluorine-based polymer thin film can be stably formed on a substrate, and it is possible to improve durability and maintain water repellency and contamination resistance properties over a long period of time. Further, a method of forming the fluorine-based polymer thin film on the substrate according to the present invention has excellent work processability and easiness in repairing when the substrate is broken.

## Description

### [Technical Field]

The present invention relates to a fluorine-based polymer thin film and a method of manufacturing the same. This application claims priority from Korean Patent Application Nos. 10-2010-0070903 and 10-2011-0073128 filed on July 22, 2010, and July 22, 2011, in the KIPO, the disclosure of which is incorporated herein by reference in its entirety.

### [Background Art]

In general, a fluorine-based polymer has very low surface energy of about 5 to 6 dyne/cm to implement functionalities such as water repellency, oil repellency, chemical resistance, a lubricating property, a release property, an antifouling property, and the like. A fluorine-based compound having the functionalities may be extensively used in fields from special fields such as high-tech industries and fine chemicals to everyday lives, and, currently, a demand thereof is rapidly increasing. Particularly, as propagation of personal computers and an use of automobiles are generalized, a material for protecting a surface of a material from external pollutants has been actively developed. A silicon compound, a fluorine compound, and the like are extensively used as raw materials of various surface coating agents for protecting a surface.

However, the fluorine-based polymer has a problem in that adhesion strength between the substrates is poor due to low surface energy. In the case where the fluorine-based polymer is deposited by using a known hot wire CVD method, a bonding portion between -CF₂- radical and glass is small, accordingly, relatively low adhesion strength to the substrate may be ensured. This is a problem frequently occurring in the fluorine-based polymer having low surface energy, and plasma treatment is performed before deposition on the polymer substrate in order to supplement this.

Particularly, in the case of the glass, adhesion strength of the fluorine-based polymer thin film is very low as compared to the polymer substrate such as PET, thus, effort using interlayers and the like has been made in order to solve the aforementioned problems.

Therefore, in the art, a method of manufacturing a fluorine-based polymer thin film having excellent adhesion strength to the substrate needs to be studied.

### [Disclosure]

### [Technical Problem]

Therefore, the present invention has been made in an effort to provide a method of forming a fluorine-based polymer thin film having low surface energy and excellent adhesion strength on a substrate.

### [Technical Solution]

An exemplary embodiment of the present invention provides a method of manufacturing a fluorine-based polymer thin film, comprising the steps of: a) forming the fluorine-based polymer thin film on a first substrate; b) forming a thin layer comprising a first functional group on the fluorine-based polymer thin film; c) forming a thin layer comprising a second functional group on a second substrate; and d) chemically bonding the first functional group and the second functional group to each other.

Another exemplary embodiment of the present invention provides a multilayered film comprising: the fluorine-based polymer thin film manufactured by the manufacturing method.

Yet another exemplary embodiment of the present invention provides a multilayered film comprising: a substrate, a fluorine-based polymer thin film, and an adhesion layer comprising a divalent functional group represented by the following Chemical Formula 1 between the substrate and the fluorine-based polymer thin film.

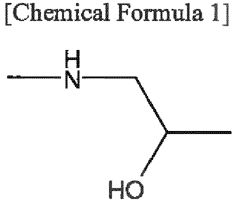

### [Advantageous Effects]

According to the exemplary embodiments of the present invention, a fluorine-based polymer thin film can be stably formed on a substrate, and it is possible to improve durability and maintain water repellency and contamination resistance properties over a long period of time. Further, a method of forming the fluorine-based polymer thin film on the substrate according to the present invention has excellent work processability and easiness in repairing when the substrate is broken.

### [Brief Description of the Drawings]

FIG. 1 is an exemplary embodiment of the present invention, and is a view showing a multilayered film comprising an adhesion layer and a fluorine-based polymer thin film on a substrate.
FIG. 2 is the exemplary embodiment of the present invention, and is a view schematically showing a thin layer forming the fluorine-based polymer thin film on the substrate.
FIG. 3 is the exemplary embodiment of the present invention, and is a view showing an adhesion property of the fluorine-based polymer thin film according to Example 1.

### <Explanation of Reference Numerals and Symbols>

10: substrate
20: Adhesion layer
30: Fluorine-based polymer thin film
40: First substrate
50: Thin layer comprising a first functional group
60: Second substrate
70: Thin layer comprising a second functional group

### [Best Mode]

Hereinafter, the present invention will be described in detail.

A method of manufacturing a fluorine-based polymer thin film according to the present invention comprises the steps of: a) forming the fluorine-based polymer thin film on a first substrate; b) forming a thin layer comprising a first functional group on the fluorine-based polymer thin film; c) forming a thin layer comprising a second functional group on a second substrate; and d) chemically bonding the first functional group and the second functional group to each other.

The method of manufacturing a fluorine-based polymer thin film according to the present invention may further comprise separating the first substrate after step d).

Step a) is a step of forming the fluorine-based polymer thin film on the first substrate, the fluorine-based polymer thin film may be formed by using a method known in the art, and more specifically, the fluorine-based polymer thin film may be formed by using a sputtering method, a reduced pressure CVD method, a plasma CVD method, a hot-wire chemical vapor deposition (CVD) method, a wet-coating method, a thermal or e-beam evaporation method and the like. Particularly, it is more preferable to form the fluorine-based polymer thin film by using the hot-wire chemical vapor deposition (CVD) method.

In general, in the case of the sputtering method and the plasma CVD method, there is a principle that fragmentation of the polymer or the monomer is performed by a plasma and the polymer or the monomer is deposited on the substrate, and various states of the polymer or the monomer that is firstly or secondly or more decomposed by the plasma are present, such that a chemical structure having various bonds is present on the deposited thin layer. However, in the case of the hot-wire CVD method, there is a merit in that the thin layer in a desired state may be manufactured by providing only energy having a level at which the monomer can be radicalized.

The fluorine-based polymer thin film may comprise a single polymer or a copolymer comprising one or more selected from tetrafluoroethylene (TFE), hexafluoropropylene, chlorotrifluoroethylene, vinylidene fluoride, vinyl fluoride, trifluoroethylene, hexafluoroisobutylene, perfluorobutyl ethylene, perfluoropropyl vinyl ether (PPVE), perfluoro ethyl vinyl ether(PEVE), perfluoro methyl vinyl ether (PMVE), perfluoro-2,2-dimethyl-1,3-dioxol (PDD), perfluoro-2-methylene-4-methyl-1,3-dioxolane (PMD), and the like, or a mixture thereof, but is not limited thereto. Particularly, it is more preferable that the fluorine-based polymer thin film comprise polytetrafluoroethylene (PTFE).

Step b) is a step forming the thin layer comprising the first functional group on the fluorine-based polymer thin film formed on the first substrate, and examples of the first functional group comprise a carboxylic acid group, a sulfonic acid group, an amine group, an epoxy group, a hydroxy group, an amide group, a phosphoric acid group, an imine group and the like, but are not limited thereto.

In step b), the first functional group performing the chemical bonding with the second functional group is present on the outermost surface of the fluorine-based polymer thin film by introducing the thin layer comprising the first functional group on the fluorine-based polymer thin film formed on the first substrate.

The step of forming the thin layer comprising the first functional group on the fluorine-based polymer thin film in step b) may be performed by using a method known in the art, and more specifically, the thin layer may be formed by using the sputtering method, the reduced pressure CVD method, the plasma CVD method, the hot-wire chemical vapor deposition (CVD) method, the wet-coating method, the thermal or e-beam evaporation method and the like. Particularly, it is more preferable to form the thin layer by using the hot-wire chemical vapor deposition (CVD) method.

In the exemplary embodiment of the present invention, the thin layer may be formed by using one or more selected from the group consisting of polyglycidyl methacrylate (PGMA), a bisphenol A type epoxy resin, a bisphenol F type epoxy resin, a phenol novolac type epoxy resin, a trisphenolmethane type epoxy resin, polyethyleneglycol diglycidyl ether, glycerin polyglycidyl ether, trimethylolpropane polyglycidyl ether, and epoxy (meth)acrylate comprising the epoxy group as the first functional group in step b).

Step c) is a step forming the thin layer comprising the second functional group on the second substrate, and examples of the functional group comprise a carboxylic acid group, a sulfonic acid group, an amine group, an epoxy group, a hydroxy group, an amide group, a phosphoric acid group, an imine group and the like, but are not limited thereto.

In step c), the second functional group performing the chemical bonding with the first functional group is present on the outermost surface of the second substrate by introducing the thin layer comprising the second functional group on the second substrate.

The step of forming the thin layer comprising the second functional group on the second substrate in step c) may be performed by using a method known in the art, and more specifically, the thin layer may be formed by using the sputtering method, the reduced pressure CVD method, the plasma CVD method, the hot-wire chemical vapor deposition (CVD) method, the wet-coating method, the thermal or e-beam evaporation method and the like. Particularly, it is more preferable to form the thin layer by using the hot-wire chemical vapor deposition (CVD) method.

In the exemplary embodiment of the present invention, in step b), the aminosilane thin layer comprising the amine group may be formed as the second functional group.

Particularly, it is more preferable that the first functional group comprises the epoxy group and the second functional group comprises the amine group.

Step d) is a step chemically bonding the first functional group and the second functional group to each other. The chemical bond of step d) may be a covalent bond, a hydrogen bond, an ion bond, a van der Waals bond, or the like. Particularly, it is more preferable that the chemical bond of step d) comprise the amine group-epoxy group bond. With regard to the amine group-epoxy group bond, the epoxy cycle is a structure that can be opened through a predetermined level of heat or time to be self-cured. The amine group is added thereto and acts as a curing agent performing this reaction at a higher rapid or lower temperature.

Step d) may be performed at 150°C or less and preferably 100°C or less.

The exemplary embodiment of the present invention provides a method of forming a PTFE thin layer on the substrate, comprising a) forming a PTFE (polytetrafluoroethylene) thin layer in advance on the substrate; b) introducing the polyglycidyl methacrylate (PGMA) thin layer on the PTFE thin layer to introduce an unreacted epoxy group on the PTFE thin layer; c) forming the thin layer comprising the amine group on the glass substrate by performing aminosilane treatment on the glass substrate; and d) forming the adhesion layer comprising the amine group-epoxy group bond through the chemical bond between the unreacted epoxy group step b) and the amine group present on the thin layer formed on the glass substrate.

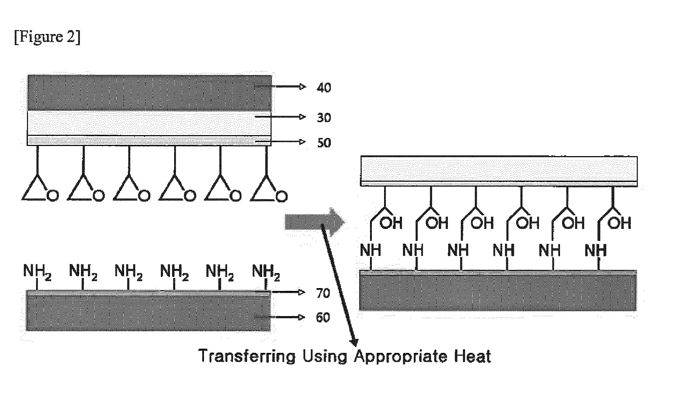

The exemplary embodiment will be described in more detail through FIG. 2 below. First, the PTFE thin layer is formed on the substrate, the polyglycidyl methacrylate (PGMA) thin layer is introduced on the PTFE thin layer weakly attached to the substrate, and aminosilane treatment is performed to a facing glass substrate. The chemical bond is provided between the thin layer comprising the amine group relatively strongly bonded to the facing glass substrate and the thin layer comprising the epoxy group formed on the PTFE thin layer very weakly bonded to the substrate to form the adhesion layer comprising the chemical bond of the amine group-epoxy group. After the adhesion layer comprising the chemical bond of the amine group-epoxy group is formed, if the substrate and the facing glass substrate are separated from each other, the PTFE thin layer is separated from the substrate and, at the same time, the PTFE thin layer is transferred on the facing glass substrate.

In the present invention, the first substrate or the second substrate may comprise glass, silicon wafer, polyethylene terephthalate (PET), polypolycarbonate, polyethylene (PE), polypropylene (PP), polyester, polystyrene, polyurethane, and the like, but is not limited thereto.

Further, the present invention provides a multilayered film comprising: the fluorine-based polymer thin film manufactured by the manufacturing method.

Further, the present invention provides a multilayered film comprising: a substrate, a fluorine-based polymer thin film, and an adhesion layer comprising a divalent functional group represented by the following Chemical Formula 1 between the substrate and the fluorine-based polymer thin film.

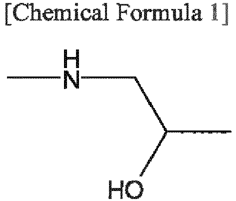

In the multilayered film according to the present invention, since the content of the substrate, the fluorine-based polymer thin film, and the like is the same as the aforementioned matter, a detailed description thereof will be omitted.

Particularly, it is more preferable that the adhesion layer be formed by the bond of polyglyacidyl methacrylate and aminosilane.

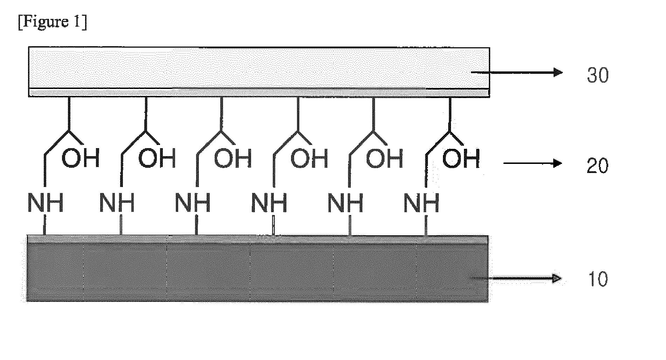

The multilayered film according to the present invention is schematically shown in the following FIG. 1.

According to the present invention, a fluorine-based polymer thin film, can be stably formed on a substrate, and it is possible to improve durability and maintain water repellency and contamination resistance properties over a long period of time. Further, a method of forming the fluorine-based polymer thin film on the substrate according to the present invention has excellent work processability and easiness in repairing when the substrate is broken.

Hereinafter, the present invention will be described in detail through Examples. Examples according to an exemplary embodiment of the present invention are set forth to explain the invention in more detail, many modifications thereof may be possible in addition to the following Examples, and the scope of the present invention is not limited to the following Examples.

### <Example>

### <Example 1>

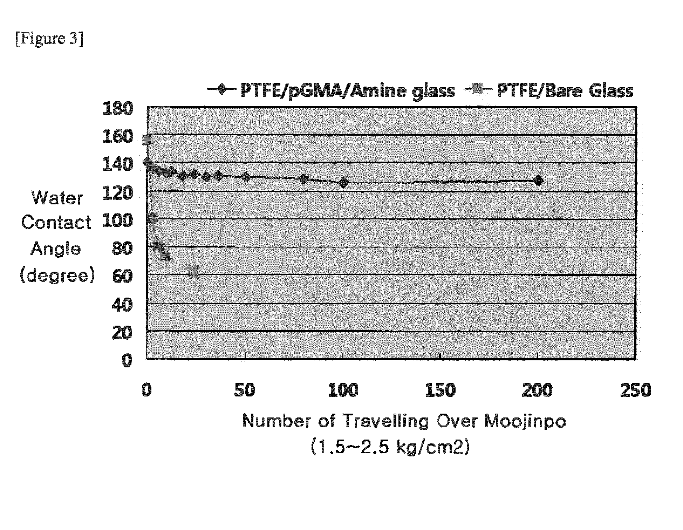

1) The PTFE thin layer was deposited by using the HWCVD method. In this case, the used monomer source adopted gas HFPO (hexafluoropylene oxide). The thickness of the deposited PTFE thin layer was 100 nm or less.
2) After the wetting property was increased by performing oxygen plasma treatment of the sample manufactured in 1), polyglycidyl methacrylate was deposited by using the HWCVD method. In this case, the thickness of the deposited PGMA was about 100 to 200 nm.
3) The substrate manufactured in 2) and the glass that was subjected to aminosilane treatment was thermally cured in the oven at normal pressure at 150°C for 1 to 3 hours by applying a predetermined pressure.
4) The result of the following Table 1 was obtained by measuring a water contact angle and surface energy of the sample transferred in 3).
5) The adhesion property of the sample on which PTFE was transferred and PTFE on which the bare glass was deposited was confirmed through a change in water contact angle according to the number of traveling over the Moojin stream. The result is shown in the following FIG. 3.

**[Table 1]**

| Sample | CA(°) | | Surface Energy (mN/m) | | |
|---|---|---|---|---|---|
| | DIW | DIM | Disperse | Polar | Total |
| PTFE/Bare Glass | 168 | 130.7 | 1.2 | 0.4 | 1.6 |
| PTFE/pGMA/Amine glass | 135.2 | 110 | 4.9 | 0 | 4.9 |
| Cured pGMA/Amine glass | 71 | 17.5 | 43.6 | 5.9 | 49.6 |

From the aforementioned result, according to the present invention, it can be seen that a fluorine-based polymer thin film can be stably formed on a substrate, and it is possible to improve durability and maintain water repellency and contamination resistance properties over a long period of time. Further, a method of forming the fluorine-based polymer thin film on the substrate according to the present invention has excellent work processability and easiness in repairing when the substrate is broken.

## Claims

1. A method of manufacturing a fluorine-based polymer thin film, comprising the steps of:
a) forming the fluorine-based polymer thin film on a first substrate;
b) forming a thin layer comprising a first functional group on the fluorine-based polymer thin film;
c) forming a thin layer comprising a second functional group on a second substrate; and
d) chemically bonding the first functional group and the second functional group to each other.

2. The method of manufacturing a fluorine-based polymer thin film of claim 1, further comprising:
separating the first substrate after step d).

3. The method of manufacturing a fluorine-based polymer thin film of claim 1, wherein the first substrate or the second substrate comprises one or more selected from the group consisting of glass, silicon wafer, polyethylene terephthalate (PET), polypolycarbonate, polyethylene (PE), polypropylene (PP), polyester, polystyrene, and polyurethane.

4. The method of manufacturing a fluorine-based polymer thin film of claim 1, wherein the fluorine-based polymer thin film of step a) comprises a single polymer or a copolymer comprising one or more selected from the group consisting of tetrafluoroethylene, hexafluoropropylene, chlorotrifluoroethylene, vinylidene fluoride, and vinyl fluoride, or a mixture thereof.

5. The method of manufacturing a fluorine-based polymer thin film of claim 1, wherein the fluorine-based polymer thin film of step a) comprises polytetrafluoroethylene (PTFE).

6. The method of manufacturing a fluorine-based polymer thin film of claim 1, wherein the fluorine-based polymer thin film of step a) is formed by using a hot wire CVD method.

7. The method of manufacturing a fluorine-based polymer thin film of claim 1, wherein the first functional group of step b) or the second functional group of step c) comprises one or more selected from the group consisting of a carboxylic acid group, a sulfonic acid group, an amine group, an epoxy group, a hydroxy group, an amide group, a phosphoric acid group, and an imine group.

8. The method of manufacturing a fluorine-based polymer thin film of claim 1, wherein the first functional group of step b) or the second functional group of step c) comprises one or more selected from the group consisting of an amine group and an epoxy group.

9. The method of manufacturing a fluorine-based polymer thin film of claim 1, wherein the thin layer comprising the first functional group of step b) is a polyglycidyl methacrylate (PGMA) thin layer.

10. The method of manufacturing a fluorine-based polymer thin film of claim 1, wherein the thin layer comprising the second functional group of step c) is a thin layer comprising the amine group formed by performing aminosilane treatment.

11. The method of manufacturing a fluorine-based polymer thin film of claim 1, wherein the chemical bond of step d) is one or more chemical bonds selected from the group consisting of a covalent bond, a hydrogen bond, an ion bond, and a van der Waals bond.

12. The method of manufacturing a fluorine-based polymer thin film of claim 1, wherein step d) is performed at 150°C or less.

13. The method of manufacturing a fluorine-based polymer thin film of claim 1, wherein the chemical bond of step d) comprises an amine group-epoxy group bond.

14. A multilayered film comprising:
the fluorine-based polymer thin film manufactured by the manufacturing method according to any one of claims 1 to 13.

15. A multilayered film comprising:
a substrate,
a fluorine-based polymer thin film, and
an adhesion layer comprising a divalent functional group represented by the following Chemical Formula 1 between the substrate and the fluorine-based polymer thin film:

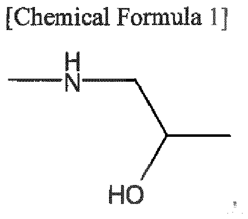

16. The multilayered film of claim 15, wherein the adhesion layer is formed by a bond of polyglycidyl methacrylate and aminosilane.
